# EUROPÄISCHE PATENTSCHRIFT

(11) **EP 0 414 333 B1**
(45) Veröffentlichungstag und Bekanntmachung des Hinweises auf die Patenterteilung: **22.02.1995**
(21) Anmeldenummer: 90250215.2
(22) Anmeldetag: 23.08.1990
(51) Int. Cl.: H04B 10/16

(54) **Datennetz mit Lichtwellenleitern**
Optical fibre data network
Réseau de données à fibres optiques

(30) Priorität: 25.08.1989 DE 3928116
(43) Veröffentlichungstag der Anmeldung: 27.02.1991
(73) Patentinhaber: ANT Nachrichtentechnik GmbH, D-71522 Backnang (DE)
(72) Erfinder: Kohn, Ulrich, Dipl.-Ing., D-7151 Grosserlach (DE); Ludwig, Reinhold, Dipl.-Ing., D-1000 Berlin 41 (DE)

(56) Entgegenhaltungen:
- DE-A- 3 732 626
- FR-A- 2 546 012
- US-A- 4 327 962
- IEEE TRANSACTIONS ON COMMUNICATIONS, Band COM-35, Nr. 3, April 1987, Seiten 419-426, IEEE, New York, US; S. WAGNER: "Optical amplifier applications in fiber optic local networks"
- ELECTRONICS LETTERS, Band 23, Nr. 12, 4. Juni 1987, Seiten 649-651, IEE, Stevenage, Herts, GB; H.J. WESTLAKE et al.: "BIdirectional and two-channel transmission system measurements using a semiconductor-laser-amplifier repeater"

## Beschreibung

Die Erfindung bezieht sich auf ein Datennetz, in dem die angeschlossenen Teilnehmerstationen über Lichtwellenleiter miteinander verbunden sind.
Im Aufsatz "Private Datennetze mit Lichtwellenleitern" in PKI Technische Mitteilungen 1/1989, ab Seite 63, werden optische Netze diskutiert; dabei handelt es sich ebenso wie in FR-A-2546012 um nicht rein optische Netze, sondern um Punkt-zu-Punkt-Verbindungen mit elektro-optischer Zwischenstufe sowie um Endverteilungen in Kupfertechnik. Die elektro-optischen Zwischenstufen sind dabei jeweils mit Lasern als Sender und Photodioden als Empfänger realisiert. Im Aufsatz von Jan P. van der Ziel in "Journal of lightwave technology" Volume 7 Number 2, vom Februar 1989, ab Seite 347ff, "Characteristics of 1,3 »m indium gallium arsenide phosphide lasers..." sind auch Anwendungen derartiger Laser als Photodetektoren beschrieben. Ferner sind Übertragungssysteme mit optischen Verstärkern bekannt, beispielsweise durch den Aufsatz von M.J. O,Mahony in "Journal of lightwave technology" Volume 6 Number 4, vom April 1988, Seiten 531ff, "semiconductor laser optical amplifiers for use in future fiber systems" oder aus IEEE TRANSACTIONS ON COMMUNICATIONS, Band COM-35, Nr. 3, April 1987, Seiten 419-426, IEEE, New York, US; S. WAGNER: "Optical amplifier applications in fiber optic local networks".

Der vorliegenden Erfindung lag die Aufgabe zugrunde, ein Datennetz der eingangs genannten Art anzugeben, das eine aufwandsarme, auch bidirektionale Anwendung der Glasfaser bis zum Teilnehmeranschluß ermöglicht. Dabei soll eine Punkt-zu-Mehrpunktverbindung möglich sein. Weiterhin soll eine problemlose Erweiterbarkeit gestattet sein.

Diese Aufgabe wurde gelöst mit den Merkmalen des Patentanspruches 1. Vorteilhafte Ausgestaltungen ergeben sich durch die Unteransprüche.

Vorzüge des erfindungsgemäßen Datennetzes bestehen beispielsweise darin, daß geringfügige bauliche Ergänzungen am optischen Verstärker zu einer elektro-optischen Schaltungsanordnung führen, die auch die Funktionen eines Senders und eines Empfängers erfüllt und keinen optischen Koppler erfordert. Diese Schaltungsanordnung bildet damit die wesentliche netzseitige Komponente einer Teilnehmerstation und ist dort für Inspektions- und Wartungsarbeiten leicht zugänglich und zudem bezüglich der Energieversorgung der optischen Verstärker im Netz örtlich günstig zu installieren. An die Stelle unterschiedlicher Komponenten in großer Vielfalt, wie sie bei konventionellen Übertragungssystemen benötigt werden, tritt bei Ausführungsformen der Erfindung ein einziger Typ einer elektro-optischen Schaltungsanordnung. Weiterhin ist bei dem erfindungsgemäßen Datennetz infolge der Eigenschaft der aktiven Zone des Lasers, in beiden Richtungen gleichermaßen betrieben werden zu können, eine bidirektionale Übertragung über ein und denselben Lichtwellenleiter möglich. Mit wenig Aufwand läßt sich also ein effektives, rein optisches Netz aufbauen und jederzeit problemlos erweitern. Als Einsatzgebiete kommen lokale Netze, Rechnerbussysteme usw. mit hohen Bitraten, beispielsweise 560 Mbit/s, und mit Datentransparenz in Frage. Ein weiterer Vorteil wird darin gesehen, daß mit einem solchen Datennetz auch große Entfernungen überbrückbar sind.

Es folgt nun die Beschreibung der Erfindung anhand der Figuren.
Figur 1 zeigt schematisch eine elektro-optische Schaltungsanordnung für einen optischen Verstärker mit den zusätzlichen Komponenten für Senden/Empfangen;
Figur 2 zeigt als Blockschaltbild ein lokales Liniennetz mit optischen Verstärkern gemäß Figur 1 als Sender, Empfänger und Verstärker.
In Figur 3 ist ein herkömmlicher optischer Verstärker perspektivisch sowie im Querschnitt dargestellt, und
in Figur 4 sind zwei Kennlinien eines optischen Verstärkers aufgetragen.

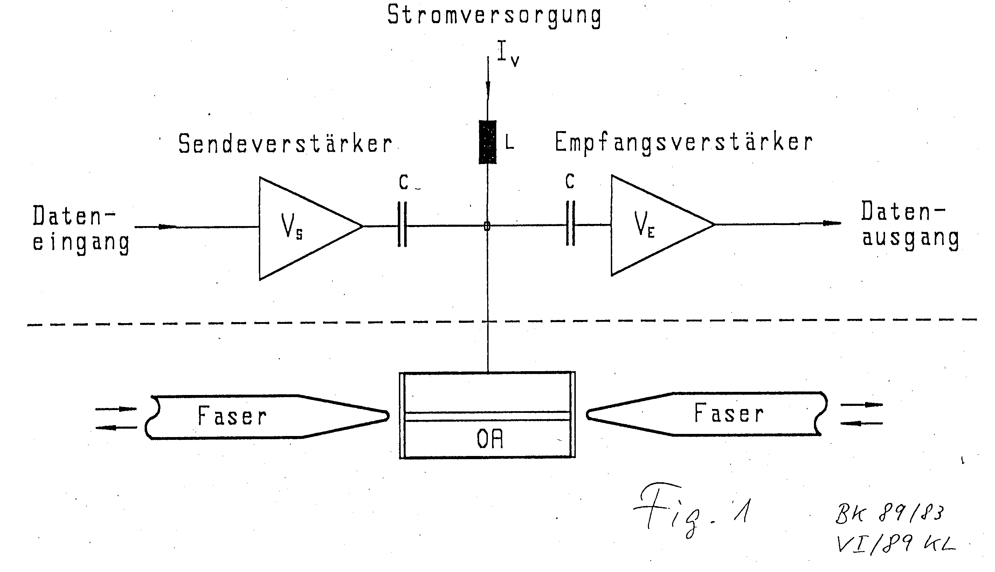

Die in Figur 1 schematisch dargestellte elektro-optische Schaltungsanordnung besteht aus einem Halbleiterlaserverstärker OA mit seiner Stromversorgung für einen Vor- oder Gleichstrom Iᵥ für den Verstärkerbetrieb. Außerdem befinden sich ein Sendeverstärker V_{S} an einem Dateneingang und ein Empfangsverstärker V_{E} an einem Datenausgang. Von diesen beiden Verstärkern V_{S}, V_{E} ist entweder der eine, der andere oder keiner von beiden in Betrieb. Die elektrischen Komponenten sind induktiv bzw. kapazitiv an den elektrischen Anschluß des Laserverstärkers OA gekoppelt, d.h. wechsel- bzw. gleichspannungsmäßig voneinander getrennt. Der Laserverstärker OA arbeitet bidirektional, verstärkt also jeweils von einer Faser eintretende und in die andere Faser gelangende Lichtwellen oder sendet Lichtwellen in beide Fasern und ist an den Facetten der aktiven Zone mit Antireflexionsschichten versehen.

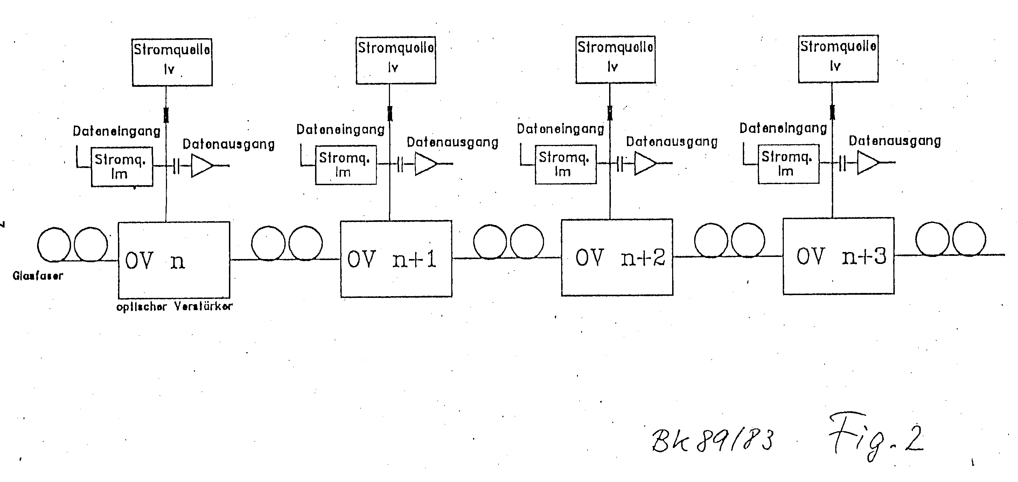

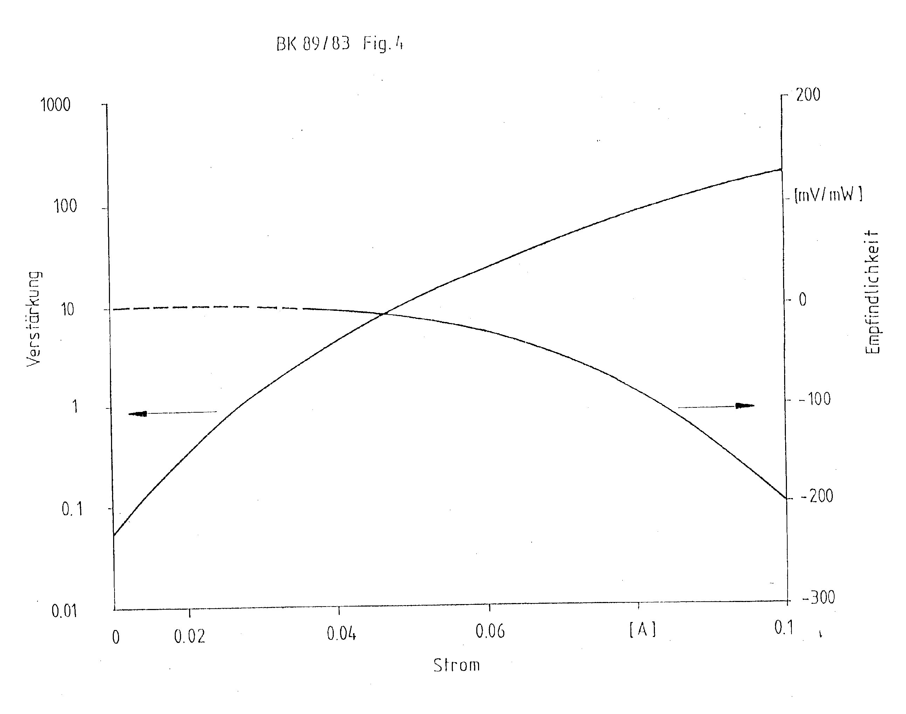

In Figur 2 ist der Verlauf eines Liniennetzes erkennbar, wobei im Zuge der Glasfaser einige optische Verstärker OVn, OVN+1, OVn+3 eingefügt sind. Diese optischen Verstärker sind jeweils an eine Stromquelle Iv über einen Widerstand mit sehr hohem Wechselwiderstand, also beispielsweise über eine Induktivität, angeschlossen. An dieser Induktivität können elektrische Wechselstromsignale abgegriffen werden, die der optische Verstärker in seiner Empfänger-betriebsweise aus den aus der einen oder der anderen Richtung ankommenden optischen Signalen bereitstellt und die über einen kapazitiv angekoppelten elektrischen Verstärker einem Empfänger zugeführt werden. Gegenüber von diesem Datenausgang ist ein Dateneingang gezeichnet; über ihn einlaufende Daten modulieren eine Stromquelle Im, die zusätzlich zu der Vorstromquelle Iv in den optischen Verstärker einspeist. Dabei arbeitet der optische Verstärker in seiner Sender-Betriebsweise, d.h. in der Betriebsart "Sendesignalwandlung". Vom Wert des Vorstroms Iv hängt der Arbeitsbereich des optischen Verstärkers, nämlich Verstärkungsfaktor, Empfindlichkeit, spontane Emission, ab (siehe hierzu Figur 4, welche zum einen die Empfindlichkeit und zum anderen die Verstärkung, aufgetragen über dem Strom, zeigt). Wenn der Modulationsstrom Im abgeschaltet ist, arbeitet der optische Verstärker in der Betriebsart "Optische Verstärkung" bzw. simultan als Empfänger in der Betriebsart "Empfangssignalwandlung".

Typische Werte für die Empfindlichkeit sind bei einem Labormuster eines optischen Verstärkers etwa 150 mV/mW. Die spontane Emission von ca. 0,2 mW wird an beiden Seiten des optischen Verstärkers in die Fasern eingekoppelt. Die Verstärkung liegt bei etwa 20 dB, wird im allgemeinen bei Ausführungsformen der Erfindung jedoch nicht in dieser Höhe benötigt. Durch Überlagern des Vorstroms Iv mit dem Modulationsstrom Im im Sendebetrieb wird die Leistung der spontanen Emission moduliert. Bei einem Vorstrom von z.B. 50 mA sollte der Modulationsstrom etwa ±40 mA betragen. Dem entspricht eine spontane Emissionsleistung von etwa 0,5 mW bei einer gesendeten binären 1 und <50 »W bei einer gesendeten binären 0.

Wegen der Bidirektionalität eines solchen Netzes ist für dieses Netz kein geschlossener Ring erforderlich. Für jede angeschlossene Teilnehmerstation ist zum Zugriff auf das Lichtwellenleiternetz lediglich ein einziger optischer Baustein notwendig, dessen Funktion der optische Verstärker übernimmt, während bei bisherigen oder herkömmlichen Systemen jeweils pro Übertragungsrichtung ein optischer Koppler, eine Sende- und eine Empfangsdiode erforderlich sind.

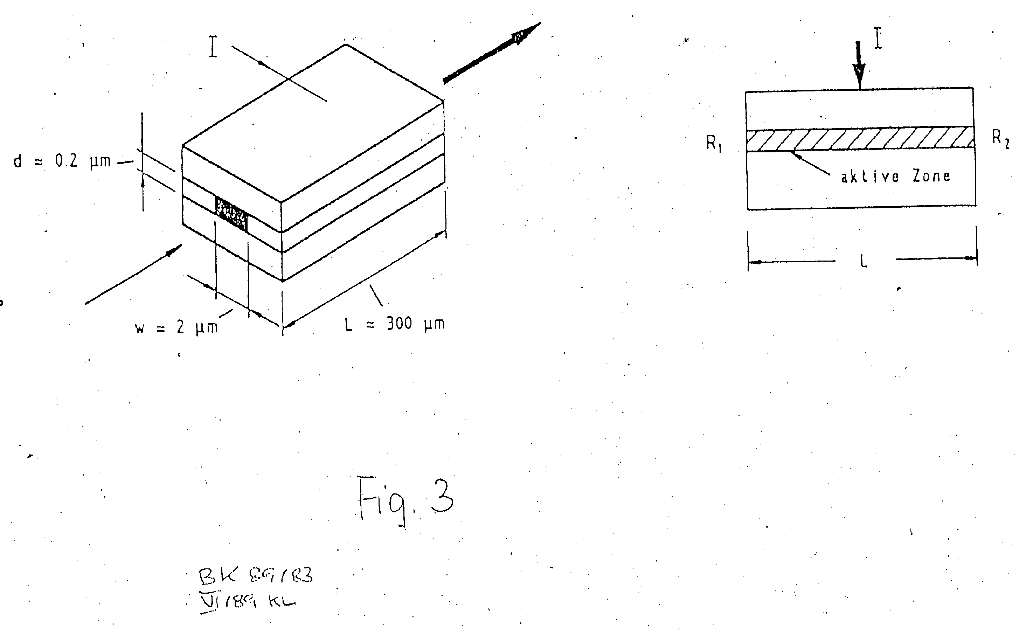

In Figur 3 ist der Streifenwellenleiter eines optischen Verstärkers mit der aktiven Zone erkennbar. An den beiden Facetten befinden sich hier nicht dargestellte Antireflexionsschichten. Die aktive Zone weist eine Höhe von etwa 0,2 »m bei einer Breite von etwa 2 »m und einer Länge von etwa 300 »m auf. Die zu verstärkende Lichtwelle tritt auf einer Schmalseite der aktiven Zone ein, die verstärkte tritt auf der gegenüberliegenden Schmalseite aus. Die Kopplung des Verstärkers mit den Glasfasern erfolgt durch verjüngte Faserenden (vgl. Fig. 1), sogenannter Taper. mit angeschmolzenen Mikrolinsen. Typische Koppelverluste liegen bei 3 dB pro Seite, so daß die Verstärkung von Faser zu Faser um etwa 6 dB kleiner als die interne Verstärkung ist. Bei der Realisierung eines lokalen Netzes mit optischen Verstärkern kann die sich mit jedem weiteren optischen Verstärker aufsummierende spontane Emission ein Problem darstellen, da nicht nur der Sender ein optisches Signal emittiert, sondern auch alle Verstärker ein Gleichlicht aussenden. Das kann zu einer Sättigung der optischen Verstärker führen, wobei Sättigung bedeutet, daß das optische Eingangssignal einen zu hohen Wert annimmt und den optischen Verstärker in die Begrenzung bringt. Abhilfe schafft hier die Kombination eines optischen Verstärkers mit einem optischen Filter. Als Element mit diesen Eigenschaften kann ein DFB-Laser, ein DBR-Laser oder ein Mehrzonen-Laser eingesetzt werden. Durch deren wellenlängenselektive Zonen wird ein sehr schmales Band im optischen Spektrum ausgefiltert. Dann stellt die spontane Emission kein Problem mehr dar. Zusätzlich kann durch Wahl des Vorstromes im Sendebereich wieder ein Laserverhalten erreicht werden, so daß zum Senden nicht mehr spontane Emission sondern Laserlicht verwendet wird.

## Patentansprüche

1. Datennetz, in dem die angeschlossenen Teilnehmerstationen über Lichtwellenleiter miteinander verbunden sind und das in Lichtwellenleiterstrecken eingefügte optische Verstärker (OVn, OVn+1, ...) aufweist, die am elektrischen Steueranschluß mit Ein- und Ausgangsschaltungen für elektrische Signale ausgerüstet und somit als Koppel- und Teilnehmeranschlußstellen ausgebildet und für die Betriebsarten "Optische Verstärkung/Optische Verstärkung und simultane Empfangssignalwandlung/Sendesignalwandlung" eingerichtet sind, wobei
- in der Betriebsart "Optische Verstärkung" die Höhe des Vorstromes (Iᵥ, Iv) die Verstärkung eintreffender Signale bestimmt,
- in der dazu simultanen Betriebsart "Empfangssignalwandlung" die dem Vorstrom (Iᵥ, Iv) überlagerten, opto-elektrisch gewandelten Signale der Teilnehmerstation zugeführt werden,
- in der Betriebsart "Sendesignalwandlung" dem Vorstrom (Iᵥ, Iv) ein ihn modulierender, sich den abzusendenden Signalen entsprechend ändernder Modulationstrom (Im) überlagert wird.

2. Datennetz nach Anspruch 1, dadurch gekennzeichnet, daß die Lichtwellenleiter bidirektional betrieben werden.

3. Datennetz nach Anspruch 2, dadurch gekennzeichnet, daß die Lichtwellenleiter ein Liniennetz mit Busstruktur bilden.

4. Datennetz nach Anspruch 1, 2 oder 3, gekennzeichnet durch Zeitmultiplexbetrieb, wobei zur selben Zeit jeweils nur eine der angeschlossenen Teilnehmerstationen in der Betriebsart "Sendesignalwandlung" und die anderen entweder in der Betriebsart "Optische Verstärkung" oder "Optische Verstärkung und simultane Empfangssignalwandlung"arbeiten.

5. Datennetz nach Anspruch 4, dadurch gekennzeichnet, daß im Zeitschlitz der sendenden Teilnehmerstation eine von allen anderen Teilnehmerstationen auswertbare Signalisierung enthalten ist, die alle anderen Teilnehmerstationen für die Betriebsart "Sendesignalwandlung" sperrt und berechtigte Teilnehmerstationen für die Betriebsart "Simultane Empfangssignalwandlung"entsperrt.

6. Datennetz nach einem der Ansprüche 1 bis 5, dadurch gekennzeichnet, daß die optischen Verstärker (OVn, OVn+1, ...) an den Laser-Faser-Koppelstellen mit optischen Filtern ausgestattet sind, die infolge spontaner Emission und Aufsummierung derselben in den optischen Verstärkern (OVn, OVn+1, ...) hervorgerufene oder zu befürchtende Sättigung verhindern.

7. Datennetz nach Anspruch 6, gekennzeichnet durch Einsatz eines DFB- oder eines DBR-Lasers in einem optischen Verstärker (OVn, OVn+1, ...).

## Claims

1. Data network, in which the connected subscriber stations are connected one with the other by way of optical conductors and which comprises optical amplifiers (OVn, OVn + 1 ...), which are inserted into optical conductor paths and equipped at the electrical control connection with input and output circuits for electrical signals and which are thus constructed as coupling and subscriber station points and equipped for the modes of operation "optical amplification/optical amplification and simultaneous received signal conversion/transmitted signal conversion", wherein
- the height of the dark current (Iᵥ, Iv) determines the amplification of incoming signals in the mode of operation "optical amplification",
- the opti-electrically converted signals, which are superposed on the dark current (Iᵥ, Iv), are fed to the subscriber station in the mode of operation "received signal conversion" simultaneous therewith and
- the dark current (Iᵥ, Iv) is superposed by a modulation current (Im), which modulates it and changes in correspondence with the signals to be transmitted, in the mode of operation "transmitted signal conversion".

2. Data network according to claim 1, characterised thereby, that the optical conductors are operated bidirectionally.

3. Data network according to claim 2, characterised thereby, that the optical conductors form a line network with a bus structure.

4. Data network according to claim 1, 2 or 3, characterised by time multiplex operation, wherein only one of the connected subscriber stations operates in the mode of operation "transmitted signal conversion" and the other in the mode of operation "optical amplification" or "optical amplification and simultaneous received signal conversion" at the same time.

5. Data network according to claim 4, characterised thereby, that in the time slot of the transmitting subscriber station, there is contained a signalling, which is evaluatable by all other subscriber stations and which blocks all other subscriber stations for the mode of operation "transmitted signal conversion" and unblocks authorised subscriber stations for the mode of operation "simultaneous received signal conversion".

6. Data network according to one of the claims 1 to 5, characterised thereby, that the optical amplifiers (OVn, OVn + 1 ...) at the optical fibre coupling points are equipped with optical filters which in consequence of spontaneous emission and summation of the same prevent saturation caused or to be feared in the optical amplifiers (OVn, OVn + 1 ...).

7. Data network according to claim 6, characterised by the use of a DFB laser or a DBR laser in an optical amplifier (OVn, OVn + 1 ...).

## Revendications

1. Réseau de données dans lequel les postes d'abonnés raccordés sont reliés entre eux par des fibres optiques et qui comporte des amplificateurs optiques (OVn, OVn+1, ...) insérés dans des trajets à fibres optiques, amplificateurs qui sont équipés, au raccordement de commande électrique, de circuits d'entrée et de sortie pour signaux électriques, de sorte qu'ils sont réalisés comme des unités de couplage et de raccordement d'abonné, et qui sont conçus pour les modes de fonctionnement "amplification optique/amplification optique et conversion simultanée du signal de réception/conversion du signal d'émission", l'agencement étant tel que
- dans le mode de fonctionnement "amplification optique", l'intensité du courant de polarisation (Iᵥ, Iv) détermine l'amplification des signaux entrants,
- dans le mode de fonctionnement "conversion du signal de réception" qui s'effectue simultanément avec le mode précédent, les signaux superposés au courant de polarisation (Iᵥ, Iv) et convertis en signaux opto-électriques, sont envoyés au poste d'abonné et
- dans le mode de fonctionnement "conversion du signal d'émission", un courant de modulation (Im) est superposé au courant de polarisation (Iᵥ, Iv), courant de modulation qui module ce courant de polarisation et change en conformité avec les signaux à émettre.

2. Réseau de données selon la revendication 1, caractérisé en ce que les fibres optiques sont utilisées dans les deux directions.

3. Réseau de données selon la revendication 2, caractérisé en ce que les fibres optiques forment un réseau sous la forme d'une ligne ayant une structure de bus.

4. Réseau de données selon la figure 1, 2 ou 3, caractérisé par une exploitation en multiplexage temporel, l'agencement étant tel qu'à un moment donné, seulement l'un des postes d'abonnés raccordés fonctionne dans le mode "conversion du signal d'émission" et les autres fonctionnent soit dans le mode "amplification optique", soit dans le mode "amplification optique et conversion simultanée du signal de réception".

5. Réseau de données selon la revendication 4, caractérisé en ce que l'intervalle de temps du poste d'abonné émetteur contient une signalisation, utilisable par tous les autres postes d'abonnés, qui bloque tous les autres postes d'abonnés pour le mode de fonctionnement "conversion du signal d'émission" et débloque les postes d'abonnés qui y sont autorisés pour le mode de fonctionnement "conversion simultanée du signal de réception".

6. Réseau de données selon une des revendications 1 à 5, caractérisé en ce que les amplificateurs optiques (OVn, OVn+1, ...) sont munis, aux points de couplage laser-fibre, de filtres optiques qui empêchent la saturation provoquée ou à craindre par suite d'émissions spontanées et du cumul d'émissions spontanées dans les amplificateurs optiques (OVn, OVn+1, ...).

7. Réseau de données selon la revendication 6, caractérisé par l'utilisation d'un laser DFB ou d'un laser DBR dans un amplificateur optique (OVn, OVn+1, ...).
